**Europäisches Patentamt**

**European Patent Office**

**Office européen des brevets**

(19)

(11) Veröffentlichungsnummer: **0 143 410**
**B1**

(12) **EUROPÄISCHE PATENTSCHRIFT**

(45) Veröffentlichungstag der Patentschrift:
27.04.88

(21) Anmeldenummer: **84113900.9**

(22) Anmeldetag: **16.11.84**

(51) Int. Cl.⁴: **F 16 C 29/00**

(54) **Linearverstellvorrichtung.**

(30) Priorität: **30.11.83 DE 3343340**

(43) Veröffentlichungstag der Anmeldung:
**05.06.85 Patentblatt 85/23**

(45) Bekanntmachung des Hinweises auf die Patenterteilung:
**27.04.88 Patentblatt 88/17**

(84) Benannte Vertragsstaaten:
**CH FR GB IT LI**

(56) Entgegenhaltungen:
**DE-A-2 242 825**
**DE-B-1 071 962**
**DE-B-1 541 759**
**US-A-3 075 100**
**US-A-3 572 906**
**US-A-3 935 486**

**VDI-ZEITSCHRIFT, Band 83, nr. 45, 11 November 1939, Seiten 1189-96, Düsseldorf; H. STABE :
"Federgelenke im Messgerätebau"**

(73) Patentinhaber: **Max- Planck- Gesellschaft zur Förderung der Wissenschaften e.V., Bunsenstrasse 10, D-3400 Göttingen (DE)**

(72) Erfinder: **Demus, Wolfgang, Erlenstrasse 1b, D-8051 Langenbach (DE)**
Erfinder: **Katterloher, Reinhard, Dr.- Ing., Blütenstrasse 14, D-8000 München 40 (DE)**

(74) Vertreter: **Patentanwälte Viering & Jentschura, Steinsdorfstrasse 6, D-8000 München 22 (DE)**

EP 0 143 410 B1

## Beschreibung

Die Erfindung betrifft eine Linearverstellvorrichtung, insbesondere zur Anwendung bei kryogenen Temperaturen und im Vakuum, mit einem Stellkörper, der an einem Tragkörper entlang eines geradlinigen Verstellweges verstellbar ist und an dem Tragkörper über mehrere zwischen dem Tragkörper und dem Stellkörper angeordnete streifenförmige, wenigstens annähernd U-förmig elastisch gebogen verlaufende Biegefedern abgestützt ist, von deren beiden U-Schenkeln der eine am Tragkörper und der andere am Stellkörper jeweils mit seinem freien Schenkelende festgelegt ist, wobei die U-Schenkel aller Biegefedern sich der Länge nach entlang des Verstellweges derart erstrecken, daß bei der Verstellung des Stellkörpers sich ihr U-Bogen entlang der Längserstreckung der Biegefedern verlagert, indem ihr einer U-Schenkel kürzer und ihr anderer U-Schenkel länger wird, und wobei die Biegefedern zu wenigstens zwei Biegefedergruppen aus jeweils wenigstens zwei entlang des Verstellweges im Abstand voneinander angeordneten Biegefedern zusammengefaßt sind.

Bei den bekannten Linearverstellvorrichtungen für große Stellwege sind die Lagerungselemente zwischen dem Stellkörper und dem Tragkörper als Wälzkörper ausgebildet. Derartige Wälzlager sind jedoch für sehr kleine Stellschritte im Mikrometerbereich nicht zufriedenstellend, weil die auftretende Reibung zu Stellungenauigkeiten und zu unregelmäßiger Verstellbewegung führt. Ferner sind Wälzlager bei Linearverstellvorrichtungen verschmutzungsempfindlich, verschleißbehaftet und meist auf eine Schmierung angewiesen, die insbesondere bei besonderen Umgebungsbedingungen, wie hohen oder sehr tiefen Temperaturen, unter Vakuumbedingungen, in aggressiver Atmosphäre oder dgl. problematisch ist.

Hingegen sind auch Linearverstellvorrichtungen bekannt (DE-Z "VDI-Zeitschrift", Band 83, 1939, Nr. 45, S. 1194, 1195), bei denen die Biegefedern, die einen geradlinigen Querschnitt haben, so angeordnet sind, daß sich ihre U-Schenkel der Länge nach senkrecht zum Verstellweg erstrecken und die Verstellbewegungen gegen die Federkraft erfolgt. Dadurch ist eine einfache, jedoch für nur kleine Verstellwege geeignete Parallelführung des Stellkörpers möglich. Außerdem muß der Stellkörper in allen Verstellagen außerhalb der Gleichgewichtslage der Biegefedern gegen deren Federkraft gehalten werden.

Es ist auch ein im Mikrometerbereich zweidimensional feinverstellbarer Tisch bekannt (DE-B-2 440 088), bei welchem vier Biegefedergruppen vorgesehen sind, die jeweils aus zwei U-förmig gebogenen Biegefedern bestehen und paarweise an den einander gegenüberliegenden Tischseiten so angeordnet sind, daß die Ebene der U-Schenkel ihrer Biegefedern senkrecht zur Tischebene verläuft und sich die U-Schenkel der Biegefedern der Länge nach entlang der jeweiligen Tischseite erstrecken. An zwei benachbarten Tischseiten ist als Stellantrieb jeweils ein Elektromagnet angeordnet, der in seiner Magnetkraft steuerbar ist. Dadurch kann der Tisch je nach der Größe der eingestellten Magnetkraft der um 90° gegeneinander versetzten Elektromagneten in jeder Richtung innerhalb der Tischebene bis in den Gleichgewichtszustand zwischen der Magnetkraft und den dieser entgegenwirkenden Federkräften der zugeordneten Biegefedern verstellt werden. Auch bei dieser Verstellvorrichtung sind daher nur kurze Verstellwege möglich und die Verstellbewegung erfolgt gegen die Federkraft der Biegefedern.

Außerdem ist auch eine in eingangs erwähnter Art ausgebildete Linearverstellvorrichtung bekannt (DE-A-22 42 825), bei welcher zur Aufhängung eines geradlinig bewegten Stellkörpers eines Meßinstrumentes zwei Biegefedergruppen vorgesehen sind, bei denen die Scheitellinien der U-Bögen der Biegefedern der einen Biegefedergruppe parallel zu denjenigen der Biegefedern der anderen Biegefedergruppe verlaufen. Auch bei dieser bekannten Linearverstellvorrichtung soll den Verstellbewegungen des Stellkörpers eine Federkraft der Biegefedern zur Ruhestellung des Stellkörpers in dessen Nullage entgegenwirken. Hierzu haben die Biegefedern eine gekrümmte Querschnittsform und eine ungleichmäßige Breite.

Durch die Erfindung wird die Aufgabe gelöst, eine Linearverstellvorrichtung der eingangs erwähnten Art derart auszubilden, daß sie auch unter extremen Umgebungsbedingungen, insbesondere bei kryogenen Temperaturen und im Vakuum, einsetzbar ist, eine nahezu reibungsfreie Verstellung ermöglicht, eine hohe Führungsgenauigkeit über lange Verstellwege hin aufweist, bei langer Lebensdauer praktisch wartungsfrei arbeitet und sich - trotz des langen Verstellweges - prinzipiell auch für Verstellschritte im Mikrometerbereich und für sehr langsame und sehr gleichmäßige Verstellbewegungen eignet.

Dies wird gemäß der Erfindung dadurch erreicht, daß die Biegefedern einen geradlinigen Querschnitt haben und den Verstellbewegungen keine Federkraft der Biegefedern entgegenwirkt und daß die Biegefedern wenigstens einer der Biegefedergruppen derart angeordnet sind, daß die Scheitellinien ihrer U-Bögen - gesehen im senkrecht zum Verstellweg verlaufenden Querschnitt - quer zu den Scheitellinien der U-Bögen der Biegefedern einer anderen der Biegefedergruppen angeordnet sind.

Da die Biegefedern bei der erfindungsgemäßen Verstellvorrichtung einen geradlinigen Querschnitt haben, kommt es bei der Verstellung des Stellkörpers, bei welcher sich der U-Bogen der U-förmig elastisch gebogen eingespannten streifenförmigen Biegefedern raupenkettenartig entlang deren Längserstreckung verlagert, so daß bei der Verstellung der eine U-Schenkel der Biegefeder kürzer, und der andere U-Schenkel länger wird, nur zu einer solchen elastischen Verformung der Biegefedern, daß bei der Verlagerung des U-Bogens eine äußere Reibung nicht auftritt, wobei die Verstellbewegung nur senkrecht zu den Federkräften der Biegefedern erfolgt und daher der Verstellung keine Federkraft der Biegefedern entgegenwirkt.

Da eine innere Reibung in den Biegefedern nicht auftritt, falls die Biegeelastizität der Biegefedern nicht überschritten wird, läßt sich eine erfindungsgemäße Verstellvorrichtung schaffen, die bei entsprechend hoher Elastizität der Biegefedern sehr leichtgängig arbeitet. Dies gilt auch für den Betrieb der Verstellvorrichtung bei kryogenen Temperaturen, bei denen der Elastizitätsmodul im allgemeinen zwar zunimmt, was jedoch andererseits die Lagerungssteifigkeit begünstigt.

Da außerdem die Verstellung des Stellkörpers von der raupenkettenartigen Verlagerung der U-Bögen der Biegefedern abgeleitet ist, was in sehr kleinen Verstellschritten vorgenommen werden kann, ist die erfindungsgemäße Linearverstellvorrichtung besonders für sehr kleine Verstellschritte geeignet, die beispielsweise im Mikrometerbereich liegen, wenngleich auch Verstellschritte bis zum Dezimeterbereich möglich sind. Darüberhinaus eignet sich die Linearverstellvorrichtung aufgrund des erfindungsgemäß erzielten Verformungsmechanismus der Biegefedern für extrem langsame und gleichmäßige Verstellgeschwindigkeiten, wie z. B. einigen Mikrometern pro Sekunde.

Ferner bedarf die erfindungsgemäße Verstellvorrichtung keiner Schmierung, wodurch sie sich außer für den Betrieb bei Tiefsttemperaturen auch für den Einsatz unter anderen extremen Bedingungen, wie im Hochvakuum oder bei Hochtemperaturen, eignet. Darüberhinaus arbeitet die erfindungsgemäße Verstellvorrichtung mit gleichbleibender Wirkung unabhängig von Wärmedehnungen und ist verschmutzungsunempfindlich, da die auftretenden Verformungen der Biegefedern von Verschmutzungen nicht beeinträchtigt sind.

Es ist an sich bekannt, zur Abstützung eines sich geradlinig bewegenden Körpers an einem Tragkörper zwischen denselben Abstützelemente in Form von streifenförmigen, gebogen verlaufenden Biegefedern geradlinigen Querschnitts vorzusehen, die an den Körpern mit ihren freien Enden festgelegt sind, wobei die Biegefedern zu zwei Biegefedergruppen aus jeweils zwei entlang des Bewegungsweges im Abstand voneinander angeordneten Biegefedern zusammengefaßt sind und die Biegefedern der einen Biegefedergruppe derart angeordnet sind, daß die Scheitellinien ihrer Bögen - gesehen im senkrecht zum Bewegungsweg verlaufenden Querschnitt - quer zu den Scheitellinien der Bögen der Biegefedern der anderen Biegefedergruppe verlaufen (US-A-3 075 100). Bei dieser bekannten Vorrichtung handelt es sich jedoch nicht um eine Verstellvorrichtung, sondern um eine Vertikalvibrationsvorrichtung. Ferner nehmen diese Biegefedern ihre Bogenform im unverspannten Zustand ein und ihre Form ist im Querschnitt nicht U-förmig, sondern halbkreisförmig. Daher werden diese Biegefedern erst bei den Vibrationsbewegungen elastisch ausgelenkt und die dabei entstehenden Federkräfte wirken den Vibrationsbewegungen entgegen, wohingegen sich bei der erfindungsgemäßen Verstellvorrichtung die U-Bögen der Biegefedern bei der Verstellbewegung entlang deren Längserstreckung verlagern und dabei die Wirkungslinien der Federkräfte stets senkrecht zum Verstellweg bleiben.

Von den erfindungsgemäß angeordneten Biegefedern werden sowohl die Abstützung als auch die Führung des Stellkörpers übernommen, wobei die Führungskräfte in der zur Biegerichtung der streifenförmigen Biegefedern, d.i. die Richtung, in welcher die Biegefederenden bei dem Biegen der Biegefedern zu deren U-förmigen Gestalt aufeinanderzubewegt werden, senkrechten Querschnittsrichtung übertragen werden, in welcher die Steifigkeit der Biegefedern wegen deren größeren Breite als Dicke höher als in der Biegerichtung ist. Ferner sind bei identischen Abmessungen der Biegefedern die Führungskräfte auf alle Biegefedern gleichmäßig verteilt.

Da für jede Biegefedergruppe mehrere Biegefedern parallel zum Verstellweg im Abstand hintereinander angeordnet sind, wirken diese Biegefedern Winkelauslenkungen des Stellkörpers um eine Achse entgegen, die senkrecht zum Verstellweg und parallel zu der Biegerichtung der Biegefedern verläuft. Da jedoch die Biegefedern wenigstens einer Biegefedergruppe - im Querschnitt gesehen - quer zu den Biegefedern einer anderen Biegefedergruppe angeordnet sind, wird derartigen Winkelauslenkungen entgegengewirkt.

Beispielsweise können für die Verstellvorrichtung drei Biegefedergruppen vorgesehen sein, von denen zwei beidseitig des Verstellweges so angeordnet sind, daß die Scheitellinie der U-Bögen der Biegefedern dieser beiden Gruppen vertikal verläuft, wohingegen in der Mitte zwischen diesen beiden Biegefedergruppen die dritte Biegefedergruppe so angeordnet ist, daß die Scheitellinie der U-Bögen von deren Biegefedern horizontal verläuft.

Vorzugsweise sind jedoch die Biegefedergruppen derart zwischen dem Stellkörper und dem Tragkörper verteilt, daß sie - gesehen im senkrecht zum Verstellweg verlaufenden Querschnitt des Stellkörpers und des Tragkörpers - auf den Seiten eines gedachten Vieleckes angeordnet sind, dessen Eckenzahl der Anzahl der vorhandenen Biegefedergruppen entspricht. Durch eine derartige Verteilung der Biegefedern rings des Stellkörpers werden die Torsionssteifigkeit der Abstützung des Stellkörpers erhöht und eine hohe Führungsstabilität erreicht.

Es wird weiter bevorzugt, daß zwischen dem Stellkörper und dem Tragkörper vier Biegefedergruppen angeordnet sind, die - gesehen im senkrecht zum Verstellweg verlaufenden Querschnitt - auf den Seiten eines Rechtecks liegen und - ebenfalls in diesem Querschnitt gesehen - um 45° zu der Vertikalen angestellt sind. Dadurch tragen sämtliche Biegefedern bei identischen Abmessungen derselben gleichmäßig sowohl zur Führung als auch zur Abstützung des Stellkörpers bei.

Für die streifenförmigen Biegefedern bestehen die Anforderungen, einerseits möglichst biegeweich zu sein, damit eine möglichst kleine Bauweise durch einen möglichst kleinen Biegeradius erreicht wird, und andererseits eine möglichst hohe Quersteifigkeit aufzuweisen, damit hinreichend hohe Führungs- und Abstützkräfte übertragen werden können. Für metallische Werkstoffe, die als Material der Biegefedern bevorzugt werden, kann die geringe Biegesteifigkeit durch eine möglichst kleine Dicke der Federn erreicht werden. Dadurch wird jedoch auch die Torsionssteifigkeit der Biegefedern kleiner, wodurch die Quersteifigkeit der Biegefedern abnimmt. Um bei kleinerer Dicke der Biegefedern gleichwohl eine hohe Quersteifigkeit zu erreichen, werden in einer bevorzugten Weiterbildung der Erfindung die streifenförmigen Biegefedern mit senkrecht zum Verstellweg verlaufenden geraden Querrippen versehen, die über die gesamte freie Länge der streifenförmigen Biegefedern hin in gleichmäßigen Abständen voneinander verteilt sind. Auf diese Weise kann eine Torsion der Biegefedern nur im unverstärkten Bereich zwischen den Querrippen stattfinden, während die Quersteifigkeit durch die Anordnung und Anzahl der Querrippen bestimmt wird.

Die Querrippen sind als Vollmaterialrippen ausgebildet und können einen halbkreisförmigen oder dreieckigen oder insbesondere rechteckigen Querschnitt haben. Hierbei ist es möglich, die Querrippen nur an einer Seite der Biegefedern auszubilden, insbesondere an der die Innenseite der U-Bögen bildenden Biegefederoberfläche. Zur weiteren Vergrößerung der Quersteifigkeit wird es jedoch bevorzugt, die streifenförmigen Biegefedern beidseitig mit einer großen Anzahl schmaler Querrippen zu versehen, wobel die Querrippen an der einen Biegefederseite sich mit denen an der anderen Biegefederseite deckungsgleich überdecken oder die Querrippen an der einen Biegefederseite und diejenigen an der anderen Biegefederseite derart gegeneinander versetzt sind, daß zwischen den Querrippen an der einen Biegefederseite und den diesen jeweils benachbarten Querrippen an der anderen Biegefederseite ein kleiner Abstand verbleibt.

Der Biegeradius der U-Bögen der Biegefedern ist derart ausgewählt, daß es nur zu einer elastischen Verformung der Biegefedern kommt, so daß in ihnen keine innere Reibung aufgrund plastischer Deformationen auftritt.

Die streifenförmigen Biegefedern können als insbesondere rechteckige Blattfedern ausgebildet sein. Es ist jedoch auch möglich, sie aus mehreren parallelen Streifen auszubilden, die seitlich nebeneinander im Abstand voneinander angeordnet sind und beispielsweise über ihre Querrippen miteinander verbunden sind, so daß die Biegefedern eine leiterartige Form haben.

Bei der erfindungsgemäßen Verstellvorrichtung ist es auch möglich, mehrere erfindungsgemäß angeordnete Biegefedern seitlich nebeneinander vorzusehen. Ferner besteht weitgehend Freiheit in der gegenseitigen Relativlage der Biegefedergruppen, die somit in geringem Abstand voneinander oder auch in größeren Abständen voneinander angeordnet sein können, wie es die Form des Stellkörpers verlangt. Der Stellkörper kann als Zeiger eines Meßinstrumentes, als Kern eines Hubmagneten oder als sonstiges Stellglied ausgebildet sein. Der Stellkörper kann jedoch auch ein stabförmiger oder plattenförmiger oder in sonstiger Weise gestalteter Geräteträger sein.

In jeder Biegefedergruppe sind wenigstens zwei erfindungsgemäß angeordnete Biegefedern vorgesehen. Es können jedoch auch mehr als zwei Biegefedern sein. Die Biegefedern in den Biegefedergruppen können so angeordnet sein, daß ihre U-Bögen in die gleiche Richtung weisen oder einander abgewendet sind. Vorzugsweise jedoch sind die Biegefedern in jeder Biegefedergruppe so angeordnet, daß ihre U-Bögen einander zugewendet sind und daher der Abstand zwischen den Stellen ihrer Befestigung an dem Stellkörper und dem Tragkörper groß ist.

Die Biegefedern zwischen dem Stellkörper und dem Tragkörper sind sämtlich so angeordnet, daß die Scheitellinie ihrer U-Bögen in jeder Verstellage des Stellkörpers senkrecht zum Verstellweg ausgerichtet ist. Im übrigen ist es bei der erfindungsgemäßen Verstellvorrichtung möglich, die Biegefedern zwischen dem Stellkörper und dem Tragkörper so anzuordnen, daß sie außer an ihren Längsenden, an denen sie an dem Stellkörper bzw. dem Tragkörper eingespannt sind, ohne Berührung mit denselben verlaufen. Es können jedoch an dem Stellkörper und dem Tragkörper auch jeweils mehrere entlang des Verstellweges verlaufende Ablegbahnen für die U-Schenkel der Biegefedern vorgesehen sein, von denen jede Ablegbahn des Stellkörpers mit einer ihr zugeordneten Ablegbahn des Tragkörpers ein Ablegbahnpaar bildet, zwischen dessen beiden Ablegbahnen jeweils eine der Biegefedergruppen angeordnet ist, deren Biegefedern mit ihren U-Schenkeln auf der jeweiligen Ablegbahn aufliegen.

Bei dieser Ausführungsform wird daher bei der Verstellung des Stellkörpers der aus dem U-Bogen der Biegefedern herauslaufende Abschnitt des länger werdenden U-Schenkels auf der zugeordneten Ablegbahn abgelegt und der in den U-Bogen hineinlaufende Abschnitt des kürzer werdenden U-Schenkels von der zugeordneten Ablegbahn abgehoben. Durch das Anlegen der U-Schenkel der Biegefedern gegen die Ablegbahnen kann die Führungsgenauigkeit zusätzlich verbessert werden.

Die in Ebenen senkrecht zu dem Verstellweg verlaufenden Oberflächenlinien jeder Ablegbahn sind zueinander parallele Geraden. Die Abiegbahnen brauchen jedoch entlang des Verstellweges nicht gerade und parallel zum Verstellweg zu verlaufen, solange durch ihren Verlauf gewährleistet ist, daß sämtliche sich auf den Ablegbahnen abrollenden Biegefedern in jeder Verstellage so angeordnet sind, daß die Scheitellinien ihrer U-Bögen senkrecht zum Verstellweg ausgerichtet sind. Jedoch wird es bevorzugt, daß sich die Abwälzbahnen parallel zum Verstellweg erstrecken und daß die Abwälzbahnen jedes Ablegbahnpaares flächenparallel zueinander verlaufen.

Wie bereits ausgeführt, eignet sich die erfindungsgemäße Verstellvorrichtung besonders für die Erzielung sehr kleiner Stellschritte, wozu für den Stellkörper ein entsprechend gesteuerter Stellantrieb vorgesehen sein kann. Es wurde jedoch erkannt, daß bei der erfindungsgemäßen Verstellvorrichtung insbesondere bei langsamen Verstellbewegungen Längsschwingungen des Stellkörpers auftreten können. Daher wird in weiterer Ausgestaltung der Erfindung vorgeschlagen, als Stellantrieb einen elektromechanischen Linearmotor zu verwenden, der aktiv schwingungsgedämpft geregelt ist. Das Grundprinzip derartiger Regelungen ist z. B. bei aktiven Elektromagnetlagerungen an sich bekannt. Es wird dabei den auftretenden Schwingungen dadurch aktiv entgegengewirkt, daß über die Regelung derartige Gegenkräfte erzeugt werden, daß die Schwingungen des Stellkörpers gedämpft werden. Besonders durch eine solche aktiv schwingungsgedämpfte Regelung des Linearmotors sind die Erzielung der Verstellgenauigkeit der erfindungsgemäßen Verstellvorrichtung im Mikrometerbereich sowie extrem langsame und dabei höchst gleichförmige Verstellgeschwindigkeiten möglich, wobei für die Erzielung der Verstellgenauigkeit die Leichtgängigkeit der erfindungsgemäßen Verstellvorrichtung die Voraussetzung bildet. Es ist daher auch wesentlich, den am Stellkörper festgelegten oder mit diesem gekuppelten Läufer des Linearmotors reibungsfrei zu führen, damit die reibungsfreie Führung des Stellkörpers nicht durch die Führung oder Lagerung des Läufers des Linearmotors beeinträchtigt wird.

Die Erfindung wird anhand einer Ausführungsform erläutert, die aus der Zeichnung wenigstens schematisch ersichtlich ist. In der Zeichnung zeigt:
Fig. 1 die Linearverstellvorrichtung im Längsschnitt,
Fig. 2 den Querschnitt der Linearverstellvorrichtung aus Fig. 1 entsprechend der Schnittlinie II-II,
Fig. 3 eine der Biegefedern der Linearverstellvorrichtung in der Abwicklung in Draufsicht,
Fig. 4 die Biegefedern aus Fig. 3 in der Seitenansicht und
Fig. 5 die Einzelheit V aus Fig. 4 im vergrößerten Maßstab.

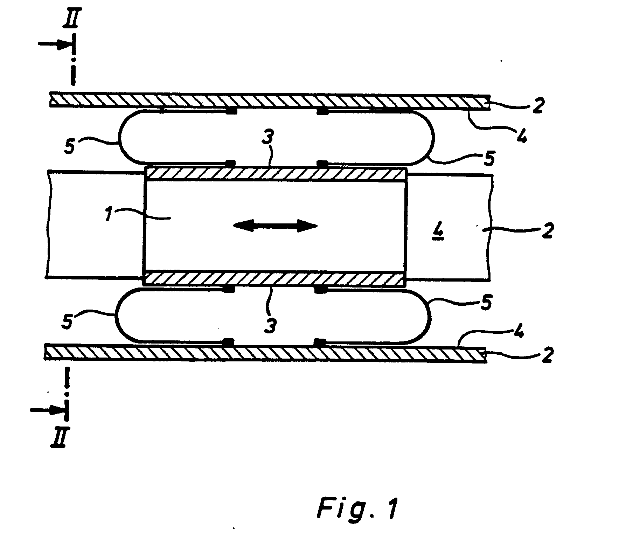

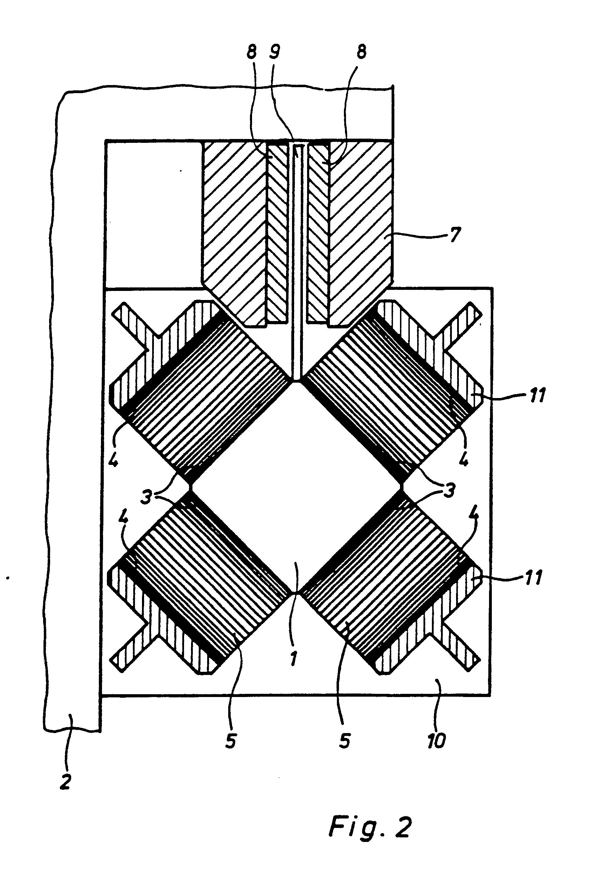

Wie aus Fig. 1 und 2 ersichtlich, weist die Linearverstellvorrichtung einen Tragkörper 2 auf, an welchem vier plattenförmige geradlinige Schienen 11 ausgebildet sind, die - gesehen im Querschnitt - auf den Seiten eines Quadrates symmetrisch zueinander angeordnet sind und an beiden Stirnenden mittels einer Stützplatte 10 am Tragkörper 2 festgelegt sind. In der Mitte zwischen den Schienen 11 ist ein im Querschnitt quadratischer, im Längsschnitt rechteckiger Stellkörper 1 angeordnet, der zwischen den Schienen 11 entlang seiner Längsachse linearverstellbar ist. Von den innenseiten der Schienen 11 und den Außenseiten des Stellkörpers 3 werden Ablegbahnen 4, 3 für die Schenkel von zwischen den Schienen 11 und dem Stellkörper 1 angeordneten Biegefedern 5 gebildet.

Jeweils eine Ablegbahn 3 des Stellkörpers 1 bildet mit einer ihr zugewendeten Ablegbahn 4 des Tragkörpers 2 ein Ablegbahnpaar, dessen beiden Ablegbahnen 3, 4 parallel zur Längsachse des Stellkörpers und einander überdeckend flächenparallel zueinander im Abstand voneinander verlaufen und entsprechend Fig. 2 - gesehen im Querschnitt - um 45° gegenüber der Vertikalen angestellt sind.

Zwischen den Ablegbahnen 3, 4 jedes Ablegbahnpaares sind zwei Biegefedern 5 in Längsrichtung der Ablegbahnen 3, 4 im Abstand voneinander angeordnet. Die Biegefedern 5 sind als rechteckige Streifen ausgebildet und U-förmig gebogen zwischen die Ablegbahnen 3, 4 des jeweiligen Ablegbahnpaares eingesetzt, so daß sie mit ihren U-Schenkeln parallel zu den Ablegbahnen 3, 4 verlaufen und an der ihnen jeweils zugeordneten Ablegbahn 3 bzw. 4 anliegen. Die Biegefedern 5 sind mit den freien Längsenden ihrer U-Schenkel über die gesamte Streifenbreite hin an der jeweils zugeordneten Ablegbahn 4 bzw. 4 festgelegt. In der aus Fig. 1 ersichtlichen Ausführungsform sind die beiden Biegefedern 5 zwischen den Ablegbahnen 3, 4 jedes Ablegbahnpaares so angeordnet, daß ihre U-Bögen einander abgewendet sind, wobei die einander zugewendeten Längsenden ihrer U-Schenkel in Längsrichtung der Ablegbahnen 3, 4 im Abstand voneinander angeordnet sind. Ferner stimmt der Abstand der Längsenden der an dem Stellkörper 1 eingespannten U-Schenkel der Biegefedern 5 von der Längsmitte des Stellkörpers 1 bei der gezeigten Ausführungsform für alle Biegefedern 5 überein, die außerdem identisch ausgebildet sind.

In Fig. 1 ist die Mittelstellung des Stellkörpers 1 dargestellt. Aus dieser Mittelstellung heraus kann der Stellkörper 1 entsprechend des eingezeichneten Doppelpfeils in beiden Richtungen um ein durch die freie Länge der Biegefedern bestimmtes begrenztes Maß entlang seiner Längsachse verstellt werden. Bei dieser Verstellung verlagern sich die U-Bögen der Biegefedern 5 entlang ihrer Länge, so daß der eine U-Schenkel der Biegefedern 5 länger wird und ihr dabei aus dem U-Bogen herauslaufender Abschnitt senkrecht zu der zugeordneten Ablegbahn auf dieser abgelegt wird. Der andere U-Schenkel der Biegefedern 5 wird kürzer und ihr in den U-Bogen einlaufender Teil wird senkrecht zu der zugeordneten Ablegbahn von dieser abgehoben.

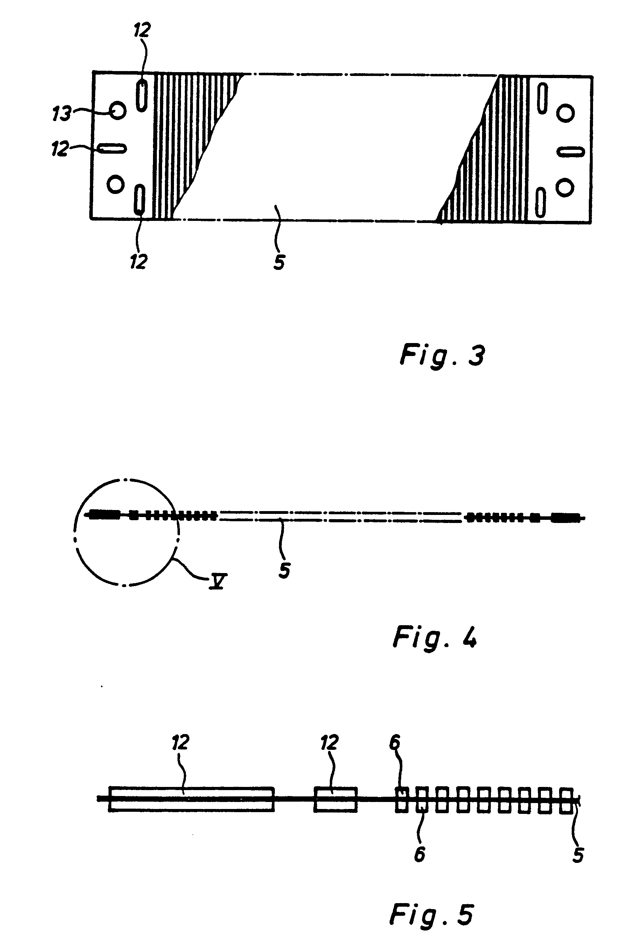

Wie aus den Fig. 3 bis 5 ersichtlich, sind die Biegefedern 5 zur Erhöhung ihrer Quersteifigkeit an beiden ihrer Oberflächenseiten mit Querrippen 6 versehen, die jeweils senkrecht zur Längsachse der Biegefedern 5 ausgerichtet sind. Die Querrippen 6 sind über die Länge der Biegefeder 5 hin in gleichen kleinen Abständen voneinander verteilt angeordnet, wobei die Querrippen 6 an der einen Oberflächenseite der Biegefedern 5 dort angeordnet sind, wo die Querrippen 6 an der anderen Oberflächenseite angeordnet sind. Die Querrippen 6 haben einen quadratischen Querschnitt. Bei der dargestellten Ausführungsform stimmt ihre Dicke und Breite mit der Weite der Lücken zwischen ihnen überein. An ihren Längsabschnitten sind die Biegefedern 5 mit Zentriervorsprüngen 12 und Befestigungslöchern 13 für ihr zentriertes Einspannen an der jeweiligen Ablegbahn versehen, so daß die Querrippen der eingespannten Biegefedern 5 senkrecht zu der Längsachse des Stellkörpers 1 verlaufen. Von den Querrippen 6 ist die gesamte freie Länge der eingespannten Biegefedern besetzt.

Die aus den Fig. 3 bis 5 ersichtliche Biegefeder besteht beispielsweise aus einem gehärteten CuBe-Streifen mit einer Dicke von 0,05 mm und galvanisch aufgetragenen Cu-Querrippen 6 mit einer Dicke und Breite von 0,5 mm bei einer freien Biegelänge der Biegefeder 5 von 91,5 mm und einer Breite der Biegefeder 5 von 35 mm.

Der Stellantrieb des Stellkörpers 1 ist bei der in Fig. 2 dargestellten Ausführungsform ein elektromagnetischer Linearmotor 7, dessen den Läufer bildende Spule 9 an einer Eckkante des Stellkörpers 1 festgelegt ist und mit entsprechendem Spiel berührungs- und daher reibungsfrei zwischen zwei Dauermagnete 8 eingreift, die an dem Tragkörper 2 festgelegt sind. Der Linearmotor 7 wird aktiv während seiner Aktivierung schwingungsgedämpft geregelt, so daß eine feinfühlige Verstellung des Stellkörpers 1 in kleinen Verstellschritten, die im Mikrometerbereich liegen, bei sehr langsamer und sehr gleichmäßiger Verstellungsgeschwindigkeit ohne Längsschwingungen des Stellkörpers 1 erreicht wird.

Bei der dargestellten Ausführungsform ist der Stellkörper 1 in der Mitte zwischen den Schienen 11 des Tragkörpers 2 angeordnet. Es ist jedoch ersichtlich, daß der Stellkörper 1 und der Tragkörper 2 funktionell gegeneinander vertauschbar sind, d.i. eine Verstellvorrichtung ausgebildet werden kann, bei welcher umgekehrt wie bei der dargestellten Ausführungsform die Schienen 11 als Stellkörper vorgesehen sein können, der von dem Tragkörper von innen her abgestützt und geführt ist.

**Patentansprüche**

1. Linearverstellvorrichtung, insbesondere zur Anwendung bei kryogenen Temperaturen und im Vakuum, mit einem Stellkörper (1), der an einem Tragkörper (2) entlang eines geradlinigen Verstellweges verstellbar ist und an dem Tragkörper (2) über mehrere zwischen dem Tragkörper (2) und dem Stellkörper (1) angeordnete streifenförmige, wenistens annähernd U-förmig elastisch gebogen verlaufende Biegefedern (5) abgestützt ist, von deren beiden U-Schenkeln der eine am Tragkörper (2) und der andere am Stellkörper (1) jeweils mit seinem freien Schenkelende festgelegt ist, wobei die U-Schenkel aller Biegefedern (5) sich der Länge nach entlang des Verstellweges derart erstrecken, daß bei der Verstellung des Stellkörpers sich ihr U-Bogen entlang der Längserstreckung der Biegefedern verlagert, indem ihr einer U-Schenkel kürzer und ihr anderer U-Schenkel länger wird, und wobei die Biegefedern (5) zu wenigstens zwei Biegefedergruppen aus jeweils wenigstens zwei entlang des Verstellweges im Abstand voneinander angeordneten Biegefedern (5) zusammengefaßt sind, dadurch gekennzeichnet, daß die Biegefedern (5) einen geradlinigen Querschnitt haben und den Verstellbewegungen keine Federkraft der Biegefedern (5) entgegenwirkt und daß die Biegefedern (5) wenigstens einer der Biegefedergruppen derart angeordnet sind, daß die Scheitellinien ihrer U-Bögen - gesehen im senkrecht zum Verstellweg verlaufenden Querschnitt - quer zu den Scheitellinien der U-Bögen der Biegefedern (5) einer anderen der Biegefedergruppen angeordnet sind.

2. Linearverstellvorrichtung nach Anspruch 1, dadurch gekennzeichnet, daß die Biegefedergruppen - gesehen im senkrecht zum Verstellweg verlaufenden Querschnitt des Stellkörpers (1) und des Tragkörpers (2) - auf den Seiten eines gedachten Vielecks angeordnet sind.

3. Linearverstellvorrichtung nach Anspruch 2, dadurch gekennzeichnet, daß zwischen dem Stellkörper (1) und dem Tragkörper (2) vier Biegefedergruppen angeordnet sind, die - gesehen im senkrecht zum Verstellweg verlaufenden Querschnitt - auf den Seiten eines Rechtecks liegen und jeweils um 45° gegenüber der Vertikalen angestellt sind.

4. Linearverstellvorrichtung nach einem der Ansprüche 1 bis 3, dadurch gekennzeichnet, daß die streifenförmigen Biegefedern (5) senkrecht zum Verstellweg verlaufende Querrippen (6) aufweisen.

5. Linearverstellvorrichtung nach Anspruch 4, dadurch gekennzeichnet, daß die streifenförmigen Biegefedern (5) beidseitig Querrippen (6) aufweisen, wobei die Querrippen (6) an der einen Biegefederseite sich mit denen an der anderen Biegefederseite überdecken oder gegenüber diesen auf Lücke versetzt angeordnet sind.

6. Linearverstellvorrichtung nach einem der Ansprüche 1 bis 5, dadurch gekennzeichnet, daß wenigstens ein Teil der Biegefedergruppen jeweils aus zwei streifenförmigen Biegefedern (5) bestehen, deren U-Bögen einander zugewendet sind.

7. Linearverstellvorrichtung nach einem der Ansprüche 1 bis 6, dadurch gekennzeichnet, daß die Biegefedern (5) mit ihren U-Schenkeln jeweils auf einer entlang des Verstellweges verlaufenden Ablegbahn (3, 4) aufliegen, die an dem Tragkörper (2) bzw. dem Stellkörper (1) ausgebildet ist.

8. Linearverstellvorrichtung nach einem der Ansprüche 1 bis 7, bei welcher für den Stellkörper (1) ein Stellantrieb vorgesehen ist, dadurch gekennzeichnet, daß der Stellantrieb ein elektromagnetischer Linearmotor (7) ist, dessen am Stellkörper (1) festgelegter oder mit diesem gekuppelter Läufer (Spule 9) reibungsfrei geführt ist und der aktiv schwingungsgedämpft geregelt ist.

**Claims**

1. A linear adjusting device, especially for use at cryogenic temperatures and under vacuum conditions, with an adjusting body (1) which is adjustable on a carrier body (2) along a linear adjusting path and is supported on the carrier body (2) by a plurality of strip-like bending springs (5) being elastically bent at least approximately into a U-like shape and placed between the carrier body (2) and the adjusting body (1), one of the U-legs of the bending springs being fixed to the carrier body (2) and the other to the adjusting body (1) each with its free leg end, wherein the U-legs of each of the bending springs (5) extend lengthwise along the adjusting path in such a way that at the adjustment of the adjusting body their U-bend moves along the longitudinal extension of the bending spring by consequence of that one of its U-leg getting shorter and its other U-leg getting longer, and wherein the bending springs (5) are arranged in at least two groups of bending springs (5) spaced apart by a given distance along the adjusting path, characterized in that the bending springs (5) have a rectilinear cross section and no spring force of the bending springs (5) counteracts the adjusting movements and that at least one of the groups of bending springs are arranged in such a way that the vertex lines of their U-bends are directed - when seen in a cross section being perpendicular to the adjusting path - transversely with respect to the vertex lines of the U-bends of the bending springs (5) of another group of bending springs.

2. Linear adjusting device according to claim 1, characterized in that the groups of bending springs are located on the sides of an imaginary rectangle when seen in a cross section of the adjusting body (1) and the carrier body (2) perpendicular to the adjusting path.

3. Linear adjusting device according to claim 2, characterized in that four groups of bending springs are arranged between the adjusting body (1) and the carrier body (2) which are located on the sides of a square - when seen in the cross section perpendicular to the adjusting path - and each of which being inclined at an angle of 45° relative to the vertical.

4. Linear adjusting device according to one of claim 1 to 3, characterized in that the strip-like bending springs have cross-ribs (6) being perpendicular to the adjusting path.

5. Linear adjusting device according to claim 4, characterized in that the cross-ribs (6) are provided on both sides of the bending springs (5) and the cross-ribs (6) on one side coincide with the cross-ribs (6) on the other side of the bending springs (5) or are staggered relative thereto for being aligned to the spaces between them.

6. Linear adjusting device according to one of claims 1 to 5, characterized in that at least a part of the number of each of the groups of bending springs consists of two strip-like bending springs (5), the U-bends of which facing each other.

7. Linear adjusting device according to one of claims 1 to 6, characterized in that each of the U-legs of the bending springs (5) leans against a laydown track (3, 4) provided along the adjusting path and formed on the carrier body (2) and on the adjusting body (1), respectively.

8. Linear adjusting device according to one of claims 1 to 7, comprising an adjusting drive for the adjusting body (1), characterized in that the adjusting drive is an electromagnetic linear motor (7) controlled with an active oscillation absorption, the slide (coil 9) of which attached to the adjusting body or coupled to it is guided without friction.

**Revendications**

1. Un dispositif de déplacement linéaire, particulièrement adapté à un emploi à températures cryogéniques et sous vide, avec un corps mobile (1) qui peut se déplacer sur un corps support (2) le long d'un chemin de déplacement rectiligne et qui est fixé sur le corps support par plusieurs ressorts recourbés élastiquement, qui se développent, sont en

**0 143 410**

bandes en une forme au moins proche d'un U, et sont disposés entre le corps support (2) et le corps mobile (1), les deux branches de l'U de chaque ressort étant fixées par leurs extrémités libres respectives sur le corps support (2) et sur le corps mobile (1), et où les branches des U de tous les ressorts recourbés (5) s'étendent longitudinalement le long du chemin de déplacement de telle façon que lors du mouvement du corps mobile, les courbes des U se déplacent le long de la dimension longitudinale des ressorts recourbés tandis que l'une des branches des U se raccourcit et que l'autre s'allonge, et où les ressorts recourbés (5) sont rassemblés en au moins deux groupes de ressorts d'au moins chacun deux ressorts disposés à une certaine distance l'un de l'autre le long du chemin de déplacement, caractérisé en ce que les ressorts recourbés (5) ont une coupe transversale rectiligne, qu'aucune force élastique de ces ressorts ne s'oppose aux mouvements de déplacement et que les ressorts sont disposés de façon que les lignes des sommets des courbes des U des ressorts d'au moins l'un des groupes soient disposés -en vue transversale perpendiculaire au chemin de déplacement- perpendiculairement aux lignes des sommets des courbes des U des ressorts recourbés (5) d'un autre groupe.

2. Un dispositif de déplacement linéaire suivant la revendication 1, caractérisé en ce que les groupes de ressorts -vue en coupe du corps mobile (1) et du corps support (2) perpendiculaires- sont disposés sur les côtés d'un carré imaginaire.

3. Un dispositif de déplacement linéaire suivant la revendication 2, caractérisé en ce que, entre le corps mobile (1) et le corps support (2), quatre groupes de ressorts sont disposés qui -vus en coupe perpendiculaire au chemin de déplacement- sont disposés sur les côtés d'un carré et forment avec la verticale un angle de 45°.

4. Un dispositif de déplacement linéaire suivant l'une des revendications 1 à 3, caractérisé en ce que les ressorts recourbés en bande présentent des nervures transversales perpendiculaires au chemin de déplacement.

5. Un système de déplacement linéaire suivant la revendication 4, caractérisé en ce que les ressorts recourbés (5) en bande présentent des nervures transversales (6) des deux côtés et où ces nervures transversales (6) sur un côté se recouvrent avec celles de l'autre côté du ressort ou au contraire sont disposées sur les encoches de celui-ci.

6. Un système de déplacement linéaire suivant l'une des revendications 1 à 5, caractérisé en ce qu'au moins une partie des groupes de ressorts est constituée de deux ressorts en bande, dont les courbes des U sont tournées l'une vers l'autre.

7. Un système de déplacement linéaire suivant l'une des revendications 1 à 6, caractérisé en ce que les ressorts recourbés (5) reposent respectivement par leurs branches des U sur une voie (3) ou (4) de repos parallèle au chemin de déplacement, ces voies étant disposées sur le corps porteur ou sur le corps mobile.

8. Un système de déplacement linéaire suivant l'une des revendications 1 à 7, dans lequel est prévu un dispositif d'entraînement en déplacement pour le corps mobile, caractérisé en ce que ce dispositif d'entraînement en déplacement est un moteur linéaire électromagnétique (7) dont le curseur ou cavalier (bobine 9) fixé sur le corps mobile (1) ou couplé à celui-ci est guidé sans frottement et est réglé activement pour amortir les oscillations.

Fig. 1

*Fig. 2*

**Fig. 3**

**Fig. 4**

**Fig. 5**